Europäisches Patentamt

(19) European Patent Office

Office européen des brevets

(11) Numéro de publication: **0 225 206**
B1

# (12) FASCICULE DE BREVET EUROPEEN

(45) Date de publication du fascicule du brevet:
23.11.89

(21) Numéro de dépôt: **86402262.9**

(22) Date de dépôt: **10.10.86**

(51) Int. Cl.⁴: **H01R 43/16,** H01R 4/20, H01C 7/10, H01G 1/14

(54) Pièce de connexion pour composant électrique.

(30) Priorité: **16.10.85** FR 8515307

(43) Date de publication de la demande:
**10.06.87 Bulletin 87/24**

(45) Mention de la délivrance du brevet:
**23.11.89 Bulletin 89/47**

(84) Etats contractants désignés:
**BE CH DE FR LI SE**

(56) Documents cités:
**CH-A- 215 493
US-A- 1 690 674
US-A- 2 887 670**

(73) Titulaire: **L.C.C.-C.I.C.E. - COMPAGNIE EUROPEENNE DE COMPOSANTS ELECTRONIQUES, 50, rue Jean-Pierre Timbaud B.P. 301, F-92402 Courbevoie(FR)**

(72) Inventèur: **Bonhomme, Bernard, THOMSON-CSF SCPI 19, avenue de Messine, F-75008 Paris(FR)**
Inventeur: **Compain, Hubert, THOMSON-CSF SCPI 19, avenue de Messine, F-75008 Paris(FR)**
Inventeur: **Henry, Michel, THOMSON-CSF SCPI 19, avenue de Messine, F-75008 Paris(FR)**

(74) Mandataire: **Ruellan-Lemonnier, Brigitte et al, THOMSON-CSF SCPI, F-92045 PARIS LA DEFENSE CEDEX 67(FR)**

## Description

La présente invention concerne une pièce de connexion pour des composants électriques tels que les résistances non linéaires ou les condensateurs, notamment les varistances utilisées comme parafoudres.

Différents types de pièces de connexion pour les composants électriques ci-dessus sont actuellement utilisés. Selon un premier mode de réalisation, la pièce de connexion est constituée essentiellement d'une plaque de base qui vient se souder sur l'électrode du composant électrique, cette plaque de base se prolongeant par une patte munie à son extrémité d'une lumière dans laquelle on vient souder le fil de connexion. Etant donné la difficulté des opérations de soudure de ce type, seuls des fils de faible section sont utilisés. Pour remédier à cet inconvénient et selon un second mode de réalisation, la pièce de connexion est constituée par une plaque de base qui vient se souder sur l'électrode, cette plaque de base se prolongeant par une patte sur laquelle on vient souder une borne extérieure de type connu. Le fil de connexion est alors fixé dans la borne extérieure. L'ensemble des pièces de connexion décrites ci-dessus nécissite des opérations de soudure. De telles opérations de soudure sont longues et coûteuses car elles demandent une main d'oeuvre importante.

La présente invention a donc pour but de fournir une pièce de connexion pour composant électrique tel que résistance non linéaire ou condensateur permettant l'utilisation de fils de connexion de section importante et avec laquelle les opérations de soudure sont limitées.

En conséquence, la présente invention a pour objet une pièce de connexion pour composant électronique tel que résistance non linéaire ou condensateur, caractérisée en ce qu'elle comporte, réalisés en au moins un matériau conducteur, un plaque de base destinée à être fixée sur le composant et un manchon pour recevoir un fil de connexion, ledit manchon étant maintenu sur la plaque de base par un moyen de guidage et de maintien. De préférence, le moyen de guidage et de maintien est constitué par au moins une patte solidaire de ladite plaque.

Avec la pièce de connexion ci-dessus, l'extrémité du fil de connexion est insérée dans le manchon dans lequel elle est fixée par sertissage.

Selon une autre caractéristique de la présente invention, pour améliorer le contact électrique entre le manchon et la surface du composant, la plaque de base est munie d'une lumière prévue sous le manchon. D'autre part, pour faciliter l'insertion de l'extrémité du fil de connexion, au moins une des extrémités du manchon est chanfreinée.

Selon encore une autre caractéristique de la présente invention, la plaque de base a une surface inférieure à la moitié de la surface du composant sur laquelle elle est fixée. En effet, la demanderesse a trouvé de manière surprenante que la plaque de base peut avoir une surface relativement faible tout en maintenant des bonnes propriétés mécanique et électrique de connexion avec la surface du composant. Cette caractéristique permet notamment de diminuer le coût de la pièce de connexion dans des proportions importantes.

La présente invention concerne aussi un procédé de fabrication d'une pièce de connexion du type ci-dessus caractérisé en ce qu'il consiste à découper dans une plaque en un matériau conducteur une pièce comportant la plaque de base et une plaque supplémentaire reliée à la plaque de base par une languette, à rouler la plaque supplémentaire pour former un manchon, à replier le manchon ainsi formé et la languette sur la plaque de base et à maintenir le manchon sur la plaque de base.

Ce procédé permet de réaliser la pièce de connexion par des simples opérations de découpage et de pliage.

D'autre part, selon une autre caractéristique de procédé de la présente invention, le maintien du manchon sur la plaque de base est réalisé par au moins une patte solidaire de ladite plaque et la ou les pattes permettant le maintien de la partie manchon sur la plaque de base sont obtenues par simple découpage de la plaque de base. De plus, une lumière est découpée dans la plaque de base à l'emplacement destiné à recevoir le machon et la languette obtenue lors du découpage de la lumière est pliée et insérée dans le manchon pour réaliser une meilleure solidarisation du manchon contre la plaque de base au niveau de la lumière. La lumière découpée dans la plaque de base permet un meilleur contact entre le manchon et la surface du composant. En effet, la pièce de connexion est soudée sur le composant en utilisant une crème à souder. Or, la crème à souder traversant la lumière vient mouiller directement le manchon, verrouille sa fente et solidarise l'ensemble.

D'autres caractéristiques et avantages de la présente invention apparaîtront à la lecture de la description faite ci-après de différents modes de réalisation de la pièce de connexion en se référant aux figures ci-annexées dans lesquelles:

- la figure 1 est une vue en perspective éclatée d'un premier mode de réalisation d'une pièce de connexion conforme à la présente invention

- les figures 2a à 2d sont différentes vues montrant les diverses phases du procédé de fabrication d'un second mode de réalisation d'une pièce de connexion conforme à la présente invention, et

- la figure 3 est une vue en coupe d'une varistance munie d'une pièce de connexion conforme à la présente invention.

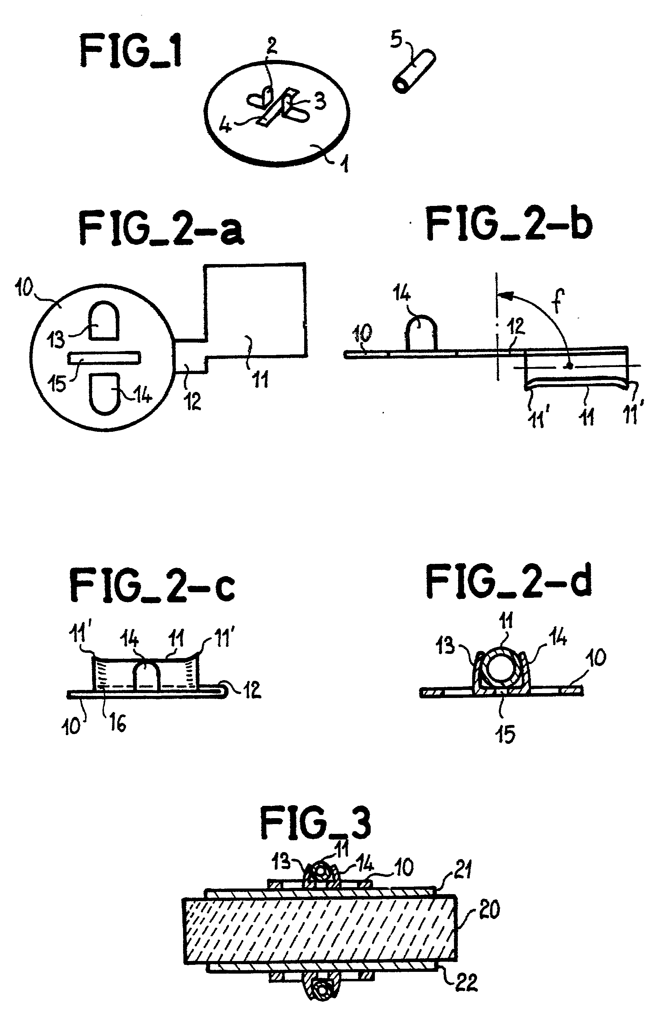

Selon un premier mode de réalisation représenté sur la figure 1, la pièce de connexion conforme à la présente invention est constituée essentiellement d'une plaque de base 1 et d'un manchon indépendant 5. La plaque de base 1 est formée d'un disque en un métal bon conducteur de la chaleur tel que du cuivre, du nickel ou similaire. Cette plaque de base comporte deux pattes 2, 3 obtenues par découpe de la plaque 1 et par pliage de manière à former entre les deux pattes une partie présentant une dimension sensiblement égale au diamètre du manchon 5. D'autre part, comme représenté sur la figure 1, dans la partie comprise entre les deux pattes 2, 3, on a découpé une lumière rectangulaire 4. Cette lumière se trouve sous le manchon 5 et est destinée à accroître le contact électrique entre le manchon 5 et la surface du composant. Le manchon 5 est constitué par une pièce tubulaire qui peut être réalisée en bronze ou en tout autre métal bon conducteur électrique.

Pour réaliser la pièce de connexion, le manchon 5 est inséré entre les pattes 2 et 3 qui sont repliées autour du manchon 5.

On décrira maintenant en se référant aux figures 2a à 2d, un procédé de fabrication d'un second mode de réalisation d'une pièce de connexion conforme à la présente invention. Cette pièce de connexion est particulièrement avantageuse car elle peut être obtenue avec un coût réduit tout en donnant les résultats requis.

Comme représenté sur la figure 2a, on découpe dans une plaque en un matériau conducteur, tel que du cuivre, du nickel ou similaire, une pièce comportant essentiellement une plaque de base constituée dans le mode de réalisation représenté par un disque 10 et un plaque supplémentaire 11 de forme rectangulaire dont un des bords se trouve sensiblement selon un des axes du disque 10 appelé axe principal. Cette plaque 11 est reliée au disque 10 par une languette 12. Dans le mode de réalisation représenté, la languette 12 est prévue entre un des coins de la partie 11 et le disque 10. D'autre part, conformément à un mode préferentiel de réalisation de la présente invention, des pattes 13, 14 ont été découpées dans la plaque de base 10 de part et d'autre de l'axe principal du disque 10 et une lumière 15 a été découpée selon cet axe principal.

Comme représenté sur la figure 2b, la plaque supplémentaire 11 est roulée sur elle-même de manière à former un manchon tubulaire dont les deux extrémités 11' sont chanfreinées pour faciliter l'insertion du fil de connexion. Il est évident pour l'homme de l'art qu'une seule extrémité peut être chanfreinée, mais dans ce cas, le côté d'insertion du fil est fixé, ce qui ne facilite pas les manipulations de la pièce de connexion. D'autre part, les pattes 13 et 14 ont été pliées perpendiculairement à la plaque de base 10, puis la languette 12 et la partie tubulaire 11 sont repliées sur la plaque de base 10 comme symbolisé par la flèche F sur la figure 2b. Ensuite, les pattes 13, 14 sont amenées au contact de la partie tubulaire 11 pour la guider et la maintenir contre la plaque, en appui sur la lumière 15. On obtient donc une pièce de connexion telle que représentée sur les figures 2c et 2d. Selon une variante de réalisation, la languette rectangulaire 16 obtenue lors du découpage de la lumière 15 est pliée au niveau du petit côté opposé à la languette 12 et est insérée à l'intérieur du manchon tubulaire 11 pour le maintenir en contact étroit contre la lumière 15.

On a représenté sur la figure 3, le montage d'une pièce de connexion conforme à la présente invention sur une varistance utilisée en parafoudre. La pièce de connexion utilisée dans ce cas est une pièce obtenue selon le procédé décrit avec référence aux figures 2a à 2d. En conséquence, on utilisera les mêmes références pour désigner les différentes parties de cette pièce. Toutefois, il est évident pour l'homme de l'art que la pièce de connexion pourrait être une pièce telle que représentée à la figure 1. La varistance donnée à titre de composant électrique comprend un élément actif 20 constitué par exemple par un masse frittée à base d'oxyde et deux électrodes 21, 22 en contact ohmique, appliquées sur les surfaces opposées du corps 20. Les électrodes 21, 22 sont constituées par exemple par un film métallisé d'étain, de zinc, d'aluminium ou similaire. Une pièce de connexion telle que décrite ci-dessus est fixée sur chaque électrode 21, 22. Cette fixation est réalisée par soudure. De manière plus spécifique, on dépose sur chaque électrode, selon un cercle et au niveau de la lumière, de la crème à souder, en utilisant une seringue ou par sérigraphie, puis on appuie la plaque de base 10 sur la crème à souder. L'utilisation de la technique de sérigraphie permet de mieux contrôler la quantité de crème à souder utilisé. Une fois les deux pièces de connexion appuyées sur les électrodes 21 et 22, on passe l'ensemble pièce de connexion et varistance dans une étuve à haute température pour réaliser la soudure.

Ensuite, on insère les fils de connexion non représentés dans les manchons tubulaires 11 et on fixe les fils par sertissage du manchon de préférence en deux points.

D'autre part, comme représenté sur la figure 3, la plaque de base présente de manière avantageuse un diamètre inférieur à la moitié du diamètre du corps 20 de la varistance. Toutefois, malgré ce diamètre, on obtient de très bonnes caractéristiques de contact et de conductivité du courant. Or, l'utilisation d'une pièce de connexion de faible diamètre permet de réaliser une pièce de très faible coût.

Il est évident pour l'homme de métier que les modes de réalisation décrits ci-dessus tant au niveau de la pièce de connexion que du composant électrique utilisé peuvent être modifés sans sortir du cadre de la présente invention. En effet, la pièce de connexion peut être utilisée avec d'autres composants électriques que les varistances à base d'oxyde de zinc, de même cette pièce de connexion peut être modifée au niveau du nombre et de la réalisation des pattes de guidage et de maintien du manchon contre la plaque de base, de la forme de la laque supplémentaire, de son mode de connexion à la plaque de base, etc.

## Revendications

1. Pièce de connexion pour composant électrique tel que résistance non linéaire ou condensateur, caractérisée en ce qu'elle comporte, réalisés en au moins un matériau conducteur de la chaleur et de l'électricité, une plaque de base (1,10) destinée à être fixée sur le composant et un manchon (5, 11) pour recevoir un fil de connexion, ledit manchon étant maintenu sur la plaque de base par un moyen de guidage et de maintien(2,3,13,14).

2. Pièce de connexion selon la revendication 1, caractérisée en ce que le moyen de guidage et de maintien est constitué par au moins une patte (2,3,13,14) solidaire de ladite plaque.

3. Pièce de connexion selon l'une quelconque des revendications 1 et 2, caractérisée en ce que la plaque de base est munie d'une lumière (14,15) prévue sous le manchon.

4. Pièce de connexion selon l'une quelconque des revendications 1 à 3, caractérisée en ce qu'au moins une des extrémités (11') du manchon est chanfreinée.

5. Pièce de connexion selon l'une quelconque des revendications 1 à 3, caractérisée en ce que la plaque de base (10) a une surface inférieure à la moitié de la surface (21,22) du composant sur laquelle elle est fixée.

6. Procédé de fabrication d'une pièce de connexion selon l'une quelconque des revendications 1 à 5, caractérisé en ce qu'il consiste:
- à découper dans une plaque en un matériau conducteur de la chaleur et de l'électricité une pièce comportant la plaque de base (10) et une plaque supplémentaire (11) reliée à la plaque de base par un languette (12),
- à rouler la plaque supplémentaire (11) pour former un manchon,
- à replier le manchon (11) ainsi formé et la languette (12) sur la plaque de base (10), et
- à maintenir le manchon sur la plaque de base par au moins un moyen de guidage et de maintien.

7. Procédé selon la revendication 6, caractérisé en ce que, lorsque le moyen de guidage et de maintien est constitué par une patte, la patte (13,14) est obtenue par découpe de la plaque de base.

8. Procédé selon l'une quelconque des revendications 6 et 7, caractérisé en ce qu'on découpe une lumière dans la plaque de base au niveau de l'emplacement destiné à recevoir le manchon.

9. Procédé selon la revendication 8, caractérisé en ce que la languette (16) obtenue lors du découpage de la lumière est pliée et insérée dans le manchon.

## Claims

1. A connection piece for an electric component such as a non-linear resistor or a capacitor, characterized in that it comprises a ground plate (1, 10) intended to be mounted on the component, and a sleeve (5, 11) intended to receive a connection wire, said ground plate and said sleeve being made from at least one heat and electricity conducting material and said sleeve being fixed on the ground plate by a guiding and fixing means (2, 3, 13, 14).

2. A connection piece according to claim 1, characterized in that the guiding and fixing means is constituted by at least one tab (2, 3, 13, 14) which is integral with said plate.

3. A connection piece according to any one of claims 1 and 2, characterized in that an opening (14, 15) is cut into the ground plate under the sleeve.

4. A connection piece according to any one of claims 1 to 3, characterized in that at least one of the ends (11') of the sleeve is chamfered.

5. A connection piece according to any one of claims 1 to 3, characterized in that the ground plate (10) surface is smaller than half the surface (21, 22) of the component on which it is mounted.

6. A method for manufacturing a connection piece according to any one of claims 1 to 5, characterized by the following steps:

- cutting a component including the ground plate (0) and an additional plate (11) connected to the ground plate via a strap (12) out of a plate made of a heat and electricity conducting material;
- rolling the additional plate (11) in order to become a sleeve;
- bending the sleeve (11) and the strap 12 back onto the ground plate (10); and
- securing the sleeve on the ground plate by at least one guiding and fixing means.

7. A method according to claim 6, characterized in that, the guiding and fixing means being constituted by a tab, the tab (13, 14) is obtained by a cut-out from the ground plate.

8. A method according to any one of claims 6 and 7, characterized in that an opening is pierced in the ground plate at the level of the place intended to receive the sleeve.

9. A method according to claim 8, characterized in that the strap (16) obtained by piercing the opening is bent and inserted into the sleeve.

## Patentansprüche

1. Anschlußstück für ein elektrisches Bauteil wie z.B. einen nicht-linearen Widerstand oder Kondensator, dadurch gekennzeichnet, daß es, aus mindestens einem wärmeleitenden und elektrisch leitenden Material hergestellt, eine Basisplatte (12, 10), die auf dem Bauteil zu befestigen ist, und eine Hülse (5, 11) zur Aufnahme eines Anschlußdrahts aufweist, wobei die Hülse auf der Grundplatte mithilfe eines Führungs- und Haltemittels (2, 3, 13, 14) gehalten wird.

2. Anschlußstück nach Anspruch 1, dadurch gekennzeichnet, daß das Führungs- und Haltemittel aus mindestens einer an der Platte befestigten Lasche (2, 3, 13, 14) besteht.

3. Anschlußstück nach einem beliebigen der Ansprüche 1 und 2, dadurch gekennzeichnet, daß die Grundplatte unter der Hülse einen Ausschnitt (14, 15) besitzt.

4. Anschlußstück nach einem beliebigen der Ansprüche 1 bis 3, dadurch gekennzeichnet, daß mindestens eines der Enden (11') der Hülse eine abgeschrägte Kante besitzt.

5. Anschlußstück nach einem beliebigen der Ansprüche 1 bis 3, dadurch gekennzeichnet, daß die Fläche der Grundplatte (10) weniger als halb so groß wie die Fläche (21, 22) des Bauteils ist, auf dem sie befestigt ist.

6. Verfahren zur Herstellung eines Anschlußstückes nach einem beliebigen der Ansprüche 1 bis 5, gekennzeichnet durch folgende Verfahrensschritte:
- aus einer Platte eines wärmeleitenden und elektrisch leitenden Materials wird ein Stück ausgeschnitten, das die Grundplatte (10) und eine über eine Zunge (12) mit der Grundplatte verbundene Zusatzplatte (11) aufweist;
- die Zusatzplatte (11) wird zu einer Hülse gerollt;
- die so gebildete Hülse (11) und die Zunge (12) werden auf die Grundplatte (10) umgefaltet;
- die Hülse wird auf der Grundplatte durch mindestens ein Führungs- und Haltemittel gehalten.

7. Verfahren nach Anspruch 6, dadurch gekennzeichnet, daß die Lasche (13, 14) als Ausschnitt an der Basisplatte ausgebildet wird, wenn das Führungs- und Haltemittel von einer Lasche gebildet wird.

8. Verfahren nach einem beliebigen der Ansprüche 6 und 7, dadurch gekennzeichnet, daß ein Ausschnitt in der Basisplatte an der Stelle angebracht wird, die dazu bestimmt ist, die Hülse aufzunehmen.

9. Verfahren nach Anspruch 8, dadurch gekennzeichnet, daß die Zunge (16), die sich durch den Ausschnitt ergibt, gefaltet und in die Hülse eingeführt wird.

FIG_1

FIG_2-a

FIG_2-b

FIG_2-c

FIG_2-d

FIG_3